# EUROPÄISCHE PATENTANMELDUNG

(11) **EP 2 199 769 A2**
(43) Veröffentlichungstag der Anmeldung: **23.06.2010**
(21) Anmeldenummer: 09015554.0
(22) Anmeldetag: 16.12.2009
(51) Int. Cl.: G01L 1/08, G01L 1/14, G01L 1/24, G01Q 10/00, G01Q 20/00, G01Q 20/02

(54) **Kraftmessgerät**

(30) Priorität: 18.12.2008 DE 102008063797
(71) Anmelder: Bundesrepublik Deutschland, vertr. durch das Bundesministerium f. Wirtschaft und Technologie,, 38116 Braunschweig (DE)
(72) Erfinder: Gao, Sai, 38112 Braunschweig (DE); Li, Zhi, 38112 Braunschweig (DE); Herrmann, Konrad, 12555 Berlin (DE)
(74) Vertreter: Plöger, Jan Manfred

(57) **Zusammenfassung**

Die Erfindung betrifft ein Kraftmessgerät, das ausgebildet ist für zu messende Kräfte unterhalb von 1 Mikronewton, mit einem Substrat (12), einem Schaft (14) zum Aufnehmen der zu messenden Kraft (F), einer mäandrierend geformten Feder (16), die in einer Substrat-Befestigungsstelle (18) an dem Substrat (12) befestigt ist und einen ersten Abschnitt und zumindest einen zweiten Abschnitt in Form eines Endabschnitts (20), der in einer Schaft-Befestigungsstelle (21) am Schaft (14) befestigt ist, aufweist, und einem kapazitiven Sensor (24), der angeordnet ist zum Erfassen einer Position zumindest eines Abschnitts (20) relativ zum Substrat (12).

## Beschreibung

Die Erfindung betrifft ein Kraftmessgerät, das ausgebildet ist zum Messen von Kräften unterhalb von 1 Mikronewton. In anderen Worten betrifft die Erfindung ein Submikronewton-Kraftmessgerät.

Mit der raschen Entwicklung der Nanotechnologie und der Nanometrologie sind die Anforderungen an die Auflösung und Genauigkeit der Krafterfassung gestiegen. Beispielsweise müssen Kräfte im Bereich von unterhalb eines Nanonewtons erfasst werden, wenn die Topographie oder die elektrochemischen Eigenschaften biologischer Proben mittels Rastersondenmikroskopie erfasst werden sollen, da die Wechselwirkungskraft zwischen einer Spitze des Rastersondenmikroskops und der Probe gewöhnlich im Bereich unterhalb eines Nanonewtons liegt. Auch um die Haltekraft einer optischen Pinzette zu erfassen, die oft dazu benutzt wird, um Nanopartikel einzufangen, sollte das Kraftmessgerät eine Auflösung von weniger als 10 Pikonewton haben, da die entsprechende Einfangkraft mit einer optischen Pinzette in diesem Bereich liegt. Um Messgeräte zum Messen von Kräften innerhalb von 1 Mikronewton zu kalibrieren, ist ein Messgerät notwendig und wünschenswert, das eine Auflösung von besser als 0,1 Nanonewton besitzt.

Bekannte Messgeräte für diesen Zweck bedienen sich beispielsweise der lateralen konfokalen Mikroskopie, was aber aufwändig ist.

Der Erfindung liegt die Aufgabe zugrunde, ein Messgerät zum Messen von Kräften innerhalb von 1 Mikronewton bereitzustellen, das besonders einfach aufgebaut und in der Lage ist, Kräfte im Nanonewton-Bereich mit hoher Genauigkeit zu messen.

Die Erfindung löst das Problem durch ein Messgerät mit (a) einem Substrat, (b) einem Schaft zum Aufnehmen der zu messenden Kraft, (c) einer mäandrierend geformten Feder, die in einer Substrat-Befestigungsstelle an dem Substrat befestigt ist und einen ersten Abschnitt und zumindest einen zweiten Abschnitt in Form eines Abschnitts, der in einer Schaft-Befestigungsstelle am Schaft befestigt ist, aufweist, und (d) einem Sensor zum Erfassen einer Position des Endabschnitts relativ zum Substrat.

Vorteilhaft an der Erfindung ist, dass durch die mäandrierend geformte Feder eine kleine Federkonstante erreicht werden kann. Das wiederum bedeutet, dass bei einer gegebenen, zu messenden Kraft ein großer Weg zurückgelegt werden kann, bis die Feder die Kraft kompensiert. Aufgrund des großen zurückgelegten Weges ist eine Messung dieses Weges mit besonders hoher Genauigkeit möglich.

Vorteilhafterweise umfasst das Interferometer einen Interferogrammzähler in Form eines kapazitiven Sensors. Ein solcher kapazitiver Interferogrammzähler zum Zählen der Interferenzstreifenzähler, der auch als Interferenzstreifenzähler bezeichnet werden kann, kann in MEMS-Technik einfach hergestellt werden.

Vorteilhaft ist, dass das Messgerät als mikro-elektromechanisches System (micro electro mechanical system, MEMS) ausgeführt werden kann. Beispielsweise kann das Substrat ein Halbleitersubstrat sein, das mit den bekannten lithographischen Verfahren zur Bearbeitung von Halbleitersubstraten bearbeitet werden kann. Es ist daher möglich, das erfindungsgemäße Messgerät mit bekannter Technologie kostengünstig herzustellen. Wegen der Möglichkeit der lithografischen Herstellung kann das erfindungsgemäße Messgerät zudem in einem Massenverfahren hergestellt werden.

Unter dem Schaft wird insbesondere jedes Bauteil verstanden, das so ausgebildet oder so angeordnet ist, dass eine zu messende Kraft auf das Bauteil ausgeübt werden kann. Es ist dabei möglich, nicht aber notwendig, dass der Schaft eine längliche Gestalt hat. Alternativ ist es beispielsweise möglich, dass der Schaft gebogen ist. Es ist zudem möglich, nicht aber notwendig, dass der Schaft längsverschieblich gelagert ist. Es ist auch möglich, den Schaft drehbar zu lagern.

Wenn mehr als eine mäandrierend geformte Feder vorhanden ist, kann gemäß einer bevorzugten Ausführungsform vorgesehen sein, dass der Schaft mittels der Federn gelagert ist. Hierunter ist insbesondere zu verstehen, dass der Schaft von den Federn vom Substrat beabstandet gehalten wird. Es ist aber auch möglich, dass der Schaft an zusätzlichen Stellen Auflagerpunkte besitzt.

Unter dem Merkmal, dass die Feder mäandrierend geformt ist, ist insbesondere zu verstehen, dass die Feder zumindest einen Richtungswechsel vollzieht. Besonders günstig ist es, dass die Feder eine Vielzahl von Richtungswechseln aufweist, so dass sich eine Zieharmonikastruktur ergibt. Zwischen der Substrat-Befestigungsstelle und dem ersten Richtungswechsel, zwischen der Schaft-Befestigungsstelle und dem nächstliegenden Richtungswechsel - sowie - sofern vorhanden, zwischen jeweils zwei benachbarten Richtungswechseln liegen jeweils Abschnitte der mäandrierend geformten Feder.

Gemäß einer bevorzugten Ausführungsform ist der Sensor ein kapazitiver Sensor. Kapazitive Sensoren sind auf Halbleitersubstraten besonders einfach herzustellen. Vorteilhaft an einem kapazitiven Sensor ist zudem, dass damit eine hohe Messgenauigkeit erreichbar ist. Es ist ein weiterer Vorteil, dass mit dem kapazitiven Sensor unmittelbar ein leicht abzugreifendes, elektrisches Signal erhalten wird. Es ist alternativ aber auch möglich, dass der Sensor ein optischer Sensor ist und beispielsweise eine Bewegung des Endabschnitts interferometrisch misst. Es ist zudem möglich, dass der Sensor ein anderer elektrischer Sensor ist. Möglich ist zudem, dass der Sensor mehrere Teil-Sensoren umfasst, die redundant oder diversitär sein können. In anderen Worten ist es möglich, dass sich zumindest zwei der Teil-Sensoren hinsichtlich ihres Wirkprinzips unterscheiden.

Gemäß einer bevorzugten Ausführungsform ist der kapazitive Sensor angeordnet zum Erfassen einer Position des Endabschnitts relativ zum Substrat. Dem liegt die Erkenntnis zugrunde, dass sich bei einer mäandrierend geformten Feder der Endabschnitt besonders stark bewegt, aber nur geringfügig verformt. Durch den Sensor, der die Position des Endabschnitts relativ zum Substrat erfasst, kann damit der Weg, den die zu messende Kraft auf den Schaft ausgeübt hat, mit hoher Genauigkeit gemessen werden, weil die Verformung gering ist. Hierzu ist nur ein geringer Aufwand notwendig, weil die mäandrierende Feder mit ihrem Endabschnitt einen großen Weg zurücklegt. So wird ein Messgerät für sehr kleine Kräfte erhalten, das gleichzeitig genau und einfach zu fertigen ist.

In einer bevorzugten Ausführungsform umfasst das Messgerät eine zweite mäandrierend geformte Feder, die an einer zweiten Substrat-Befestigungsstelle an dem Substrat befestigt ist, einen ersten Abschnitt und zumindest einen zweiten Abschnitt in Form eines zweiten Endabschnitts, der in einer zweiten Schaft-Befestigungsstelle an dem Schaft befestigt ist, aufweist und bezüglich einer zu einer Schaft-Längsachse des Schafts senkrecht stehenden Quer-Symmetrieebene symmetrisch zur ersten Feder ausgebildet ist, und wobei das Messgerät zusätzlich einen zweiten Sensor zum Erfassen einer Position zumindest eines Abschnitts, insbesondere des zweiten Endabschnitts, der zweiten Feder relativ zum Substrat aufweist. Dieser zweite Sensor ist vorzugsweise ein kapazitiver Sensor.

Wenn eine Kraft auf den Schaft aufgebracht wird, so verlagert sich dieser relativ zum Substrat. Dadurch verlagern sich auch die beiden Endabschnitte relativ zum Substrat. Der erste Sensor und der zweite Sensor sind nun bevorzugt so angeordnet, dass einer der beiden Sensoren einen zunehmenden Abstand zwischen dem jeweiligen Endabschnitt und einem Bezugspunkt erfasst, wohingegen der andere Sensor einen abnehmenden Abstand zwischen dem jeweiligen Endabschnitt und einem anderen Bezugspunkt detektiert. Da die beiden Federn gleich aufgebaut sind, haben sie auch die gleichen Federkonstanten und verformen sich auf spiegelsymmetrisch entsprechende Weise. Sollte also eine Verformung eines der Endabschnitte zu einem Messfehler führen, so wird dieser Messfehler durch den Neufehler aufgrund der Verformung des jeweils anderen Endabschnitts ausgeglichen. So wird die erreichbare Messgenauigkeit für die Kraft nochmals verbessert.

Besonders bevorzugt weist das Messgerät eine dritte mäandrierend geformte Feder auf, die in einer dritten Substrat-Befestigungsstelle an dem Substrat befestigt ist, einen ersten Abschnitt und zumindest einen zweiten Abschnitt in Form eines dritten Endabschnitts, der in einer dritten Schaft-Befestigungsstelle an dem Schaft befestigt ist, und bezüglich einer parallel zur Schaft-Längsachse verlaufenden Längs-Symmetrieebene symmetrisch zur ersten Feder ausgebildet ist. Das Kraftmessgerät besitzt dann einen dritten Sensor zum Erfassen einer Position zumindest eines Abschnitts, insbesondere des dritten Endabschnitts relativ zum Substrat. Das Kraftmessgerät besitzt zudem bevorzugt eine vierte mäandrierend geformte Feder, die in einer vierten Substrat-Befestigungsstelle an dem Substrat befestigt ist, einen ersten Abschnitt und zumindest einen zweiten Abschnitt in Form eines vierten Endabschnitts, der in einer vierten Schaft-Befestigungsstelle am Schaft befestigt ist, aufweist und bezüglich einer parallel zur Schaft-Längsachse verlaufenden Längssymmetrieebene symmetrisch zur zweiten Feder ausgebildet ist, und einen vierten kapazitiven Sensor zum Erfassen einer Position zumindest eines Abschnitts, insbesondere des vierten Endabschnitts, der vierten Feder relativ zum Substrat.

Bevorzugt sind alle vier Sensoren kapazitive Sensoren. Insbesondere sind die Federn so angeordnet, dass sich eine drehsymmetrische Anordnung ergibt. In diesem Fall ist der Schaft vorzugsweise ausschließlich an den Federn gelagert, so dass keine Reibungskräfte zwischen dem Schaft und dem Substrat entstehen, die das Messergebnis verfälschen könnten. Es ergibt sich so ein Messgerät mit einer besonders hohen Genauigkeit.

Bevorzugt verlaufen alle Endabschnitte, oder sogar alle Abschnitte, im Wesentlichen geradlinig. Hierunter ist zu verstehen, dass es möglich, nicht aber notwendig ist, dass alle Endabschnitte im strengen mathematischen Sinne geradlinig verlaufen. Vielmehr sind Abweichungen, beispielsweise von weniger als 5 %, möglich. Die Abweichungen werden berechnet, indem ein Hüllquader um den Endabschnitt berechnet, und dessen Breite ins Verhältnis zur Breite der Feder gesetzt wird.

Eine besonders einfach zu fertigende Ausführungsform, die gleichzeitig eine hohe Genauigkeit gestattet, ergibt sich, wenn die mäandrierend geformten Federn eine Vielzahl von im Wesentlichen gradlinig verlaufenden Abschnitten umfassen, die im kraftfreien Zustand alle im Wesentlichen parallel zueinander angeordnet sind. Auch hier bedeutet das Merkmal, dass die Abschnitte im Wesentlichen parallel zueinander angeordnet sind, dass es möglich, nicht aber notwendig ist, dass die Abschnitte im strengen mathematischen Sinne parallel zueinander verlaufen. Abweichungen von bis zu 10 % sind möglich, ohne dass die Messgenauigkeit signifikant eingeschränkt ist.

Besonders bevorzugt haben die Abschnitte einen konstanten Querschnitt, der ein Aspektverhältnis von mehr als 5 aufweist. Das heißt, dass eine Erstreckung des Abschnitts in Biegerichtung höchstens 1/5 einer Erstreckung senkrecht dazu beträgt. Die Biegerichtung liegt in derjenigen Ebene, in der die Feder unabhängig von ihrem Dehnungszustand liegt.

Besonders bevorzugt sind die Federn so gewählt, dass die Federkonstante kleiner ist als 0,2 Newton pro Meter. Auf diese Weise wird ein besonders empfindliches Messgerät erhalten. Die Federkonstante wird umso kleiner, je mehr Mäanderbögen bzw. Abschnitte die Feder aufweist. Durch Erhöhen der Zahl der Mäanderbögen, insbesondere also der Zahl der geradlinig zueinander verlaufenden Abschnitte, kann also die Federkonstante entsprechend klein eingestellt werden. Besonders bevorzugt ist es, wenn das Substrat aus einem Halbleiter-Einkristall, insbesondere einem Silizium-Einkristall besteht, da dieses bei mechanischer Belastung keine Veränderung der Versetzungsdichte zeigt, so dass die mechanischen Eigenschaften der Feder über eine lange Zeit im Wesentlichen konstant bleiben.

Ein besonders genaues Messgerät wird erhalten, wenn es einen elektrostatischen Kammantrieb aufweist, der angeordnet ist zum Aufbringen einer Kraft auf den Schaft. Insbesondere ist der elektrostatische Kammantrieb ausgebildet zum Kompensieren der am Schaft anliegenden, zu messenden Kraft. Es ist in diesem Fall bevorzugt eine Steuerung vorhanden, die ausgebildet ist, um an dem Kammantrieb eine solche Spannung anzulegen, dass die angelegte, zu messende Kraft gerade kompensiert wird. Durch Messen der am Kammantrieb anliegenden elektrischen Spannung kann dann mit sehr hoher Genauigkeit auf die zu messende Kraft geschlossen werden.

Besonders bevorzugt wird ein derartiges Messgerät in einem Rastersondenmikroskop, insbesondere einem Rasterkraftmikroskop, eingesetzt.

Gemäß einer bevorzugten Ausführungsform ist zumindest einer der Sensoren eingerichtet, um die Position von zumindest zwei Abschnitten der jeweiilgen Feder relativ zum Substrat zu erfassen. Unter dem Erfassen wird hier, wie auch in der gesamten übrigen Beschreibung, stets verstanden, dass eine Meßgröße aufgenommen wird, aus der auf die Position geschlossen werden kann.

Insbesondere ist auch ein Messen ein Erfassen. Dadurch, dass Messwerte in mehreren Abschnitten der Feder aufgenommen werden können, kann eine höhere Genauigkeit erzielt werden.

Gemäß einer bevorzugten Ausführungsform umfasst das Kraftmessgerät eine Wegmessvorrichtung, die ausgebildet ist zum Messen einer Änderung einer Position des Schafts relativ zum Substrat. Um beispielsweise eine Federkonstante mit besonders hoher Genauigkeit messen zu können, muss sowohl die Kraftmessung als auch die Wegmessung mit einer hohen Genauigkeit erfolgen. Eine besonders hohe Genauigkeit kann dann erreicht werden, wenn die zu messenden Größen direkt auf eine zur Definition verwendete Darstellung der jeweiligen Messgröße zurückgeführt werden können. Bevorzugt umfasst die Wegmessvorrichtung daher ein Interferometer. Da die Wellenlänge mit einer besonders hohen Genauigkeit dargestellt werden kann, ist eine Längenmessung auf Basis einer interferometrischen Messung besonders genau.

Bei dem Interferometer handelt es sich bevorzugt um ein Multi-pass-Interferometer, bei dem der Lichtstrahl zwischen zwei Spiegeln mehrfach hin und her reflektiert wird, wobei einer der Spiegel am Schaft und einer am Substrat befestigt ist. So wird eine besonders hohe Ortsauflösung erreicht.

Besonders einfach kann das Interferometer dadurch aufgebaut werden, dass das Kraftmessgerät eine Lichtleitfaser aufweist, über die ein Laserstrahl mit genau definierter Wellenlänge eingekoppelt und beispielsweise auf das Multipass-Interferometer geleitet wird.

Das Kraftmessgerät ist, wenn es einen elektrostatischen Kammantrieb besitzt, zudem als Aktor einsetzbar und ermöglicht eine Kraft- und Längenmessung mit einer Auflösung der Kraft bis in den Pikonewton-Bereich sowie der Längen bis in den Pikometer-Bereich. Durch die Kombination von Kraft- und Längenmessung in einem Kraftmessgerät können verschiedene Anwendungen verwirklicht werden, nämlich ein rückführbarer Piezokraftaktor und -sensor sowie ein rückführbares Längenmesssystem mit Antrieb.

Dieses Kraftmessgerät kann Teil eines Rasterkraftmikroskops sein, so dass Spitze-Probe-Wechselwirkungen zwischen einer Spitze des Rasterkraftmikroskops und der Probe besonders genau gemessen werden können. Das Kraftmessgerät kann zudem bei der Verifizierung theoretischer Modelle für die Rasterkaftmikroskopie eingesetzt werden. Beispielsweise wird das Kraftmessgerät eingesetzt in einem elektrostatischen Rasterkraftmikroskop (electrostatic force microscope) oder einem Magnet-Kraftmikroskop (magnetic force microscope). Das Kraftmessgerät kann zudem in einem Rasterkraftmikroskop als Lateralkraftnormal eingesetzt werden. Eine weitere Verwendung kann das Kraftmessgerät in einem Verfahren zum dimensionellen Kalibrieren von Rastersondenmikroskopen finden. Aufgrund der kleinen messbaren Kräfte kann das Kraftmessgerät auch in einem Verfahren eingesetzt werden, bei dem mit einem Rasterkaftmikroskop kleinste Kräfte gemessen werden müssen, weil die Spitze des Rasterkraftmikoskops Nanoröhrchen, insbesondere Kohlenstoff-Nanoröhrchen, umfasst.

Das erfindungsgemäße Kraftmessgerät kann zudem in einem Verfahren zum Bestimmen der lateralen und/oder der nominellen Steife (Federkonstante) des Kantilevers von Rastersondenmikroskopen verwendet werden. Möglich ist auch ein Einsatz des Kraftmessgeräts in einem Verfahren zur Kalibrierung eines Spektroskops für kleine Kräfte. Günstig ist zudem ein Einsatz des Kraftmessgeräts in einem Kalibrierverfahren für Nanokraftnormale und/oder für Sensoren für kleine Kräfte, die auf Kantilevern beruhen. Ein weiterer Einsatz des Kraftmessgeräts ist in Verfahren zum Untersuchen eines optischen Kraftfelds mit stark konzentriertem Licht. Auch in Kalibrierverfahren für berührungslose optische und/oder magnetische Kraftsensoren ist ein Einsatz denkbar. Das gleiche gilt für Verfahren, in denen die Funktion optischer Pinzetten quantitativ untersucht wird.

Wegen der hohen Messgenauigkeit und der Möglichkeit, kleine Kräfte und gegebenenfalls auch kleine Wege zu messen, kann das Kraftmessgerät gut auch in einem Verfahren zur Bestimmung der mechanischen Eigenschaften und/oder der Dimensionen kleiner Werkstoffproben eingesetzt werden. Derartige Werkstoffproben können beispielsweise Nanodrähte, Nanoröhren oder ultradünne Filme sein. Das Kraftmessgerät wird dann in einer Werkstoffprüfvorrichtung eingesetzt, mit der zum Beispiel ein Nanozugversuch durchgeführt werden kann.

Weitere Einsatzgebiete sind die Bestimmung der Wechselwirkungskraft und der Dimension in lebenden Zellen, Partikeln und so weiter, sowie die Bestimmung der mechanischen Eigenschaften der Dimensionen der Mikro- und Nanopartikel, einschließlich lebender Zellen, Mikroorganismen, und so weiter. In solchen Fällen wird das Kraftmessgerät als Teil einer Nanoindentationsvorrichtung bzw. eines Druckstempels eingesetzt. Denkbar ist auch, das Kraftmessgerät zur Untersuchung von Gitterabständen in Kristallen einzusetzen.

Als Beispiel zeigt die folgende Tabelle Kennzahlen für drei mögliche Kraftmessgeräte:

| Typ | Maximalkraft, µN | Steife, N/m | Resonanzfrequenz, kHz | Kraftauflösung, pN | Längenauflösung, nm |
|---|---|---|---|---|---|
| 1 | 1000 | 20 | 2 | 200 | 0,01 |
| 2 | 100 | 2 | 8 | 20 | 0,01 |
| 3 | 10 | 0,25 | 1,5 | 2,5 | 0,01 |

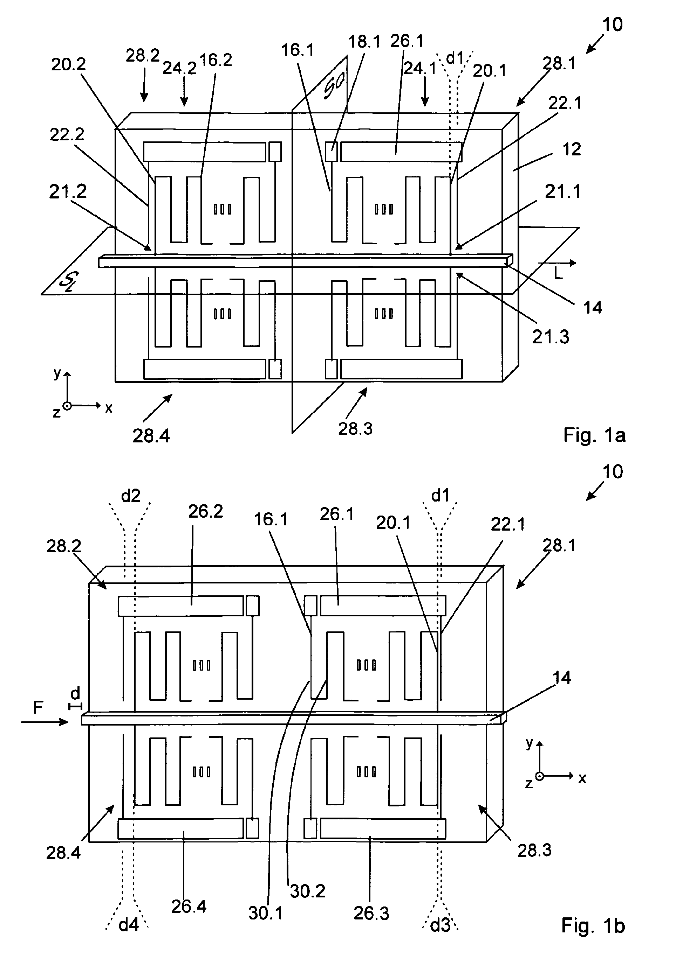

Im Folgenden wird die Erfindung anhand der beigefügten Zeichnungen näher erläutert. Dabei zeigt
- Figur 1 a: eine schematische Ansicht eines erfindungsgemäßen Messgeräts,
- Figur 1 b: das Messgerät gemäß Figur 1 mit einer aufgebrachten, zu messenden Kraft,
- Figur 2: eine Detailansicht einer mäandrierend geformten Feder aus einem erfindungsgemäßen Messgerät,
- Figur 3: eine alternative Ausführungsform des erfindungsgemäßen Messgeräts und
- Figur 4: eine zweite alternative Ausführungsform eines erfindungsgemäßen Messgeräts,
- Figur 5: eine dritte alternative Ausführungsform eines erfindungsgemäßen Messgeräts, das eine Wegmessvorrichtung umfasst.

Figur 1a zeigt ein Messgerät 10, das ein Substrat 12, einen Schaft 14 und eine mäandrierend geformte Feder 16.1 aufweist. Die Feder 16.1 ist in einer Substrat-Befestigungsstelle 18.1 an dem Substrat 12 befestigt. Mit einem Endabschnitt 20.1 ist die Feder 16.1 in einer Schaft-Befestigungsstelle 21.1 an dem Schaft 14 befestigt.

Dem Endabschnitt 20.1 parallel versetzt gegenüber ist eine Kondensatorplatte 22.1 angeordnet, die zusammen mit dem Endabschnitt 20.1 Teil eines kapazitiven Sensors 24.1 ist. Der Sensor 24.1 umfasst zudem eine Kontaktierung 26.1, über die ein Messsignal des Sensors 24.1 abgegriffen werden kann. Wirkt eine Kraft F auf den Schaft 14, so verlagert sich dieser relativ zum Substrat 12. Diese Situation ist in Figur 1b gezeigt.

Die Feder 16.1 und der Sensor 24.1 sind Bestandteil eines ersten Kraftmesselements 28.1.

Das Messgerät 10 besitzt, wie Figur 1 a zeigt, zudem ein zweites Kraftmesselement 28.2, das zum ersten Kraftmesselement 28.1 spiegelsymmetrisch bezüglich einer Quersymmetrieebene S_{Q} aufgebaut ist. Die Quersymmetrieebene S_{Q} verläuft senkerecht zu einer Schaft-Längsachse L des Schafts 14.

Das Messgerät 10 weist zudem ein drittes Kraftmesselement 28.3 auf, das bezüglich einer Längs-Symmetrieebene S_{L} symmetrisch zum ersten Kraftmesselement 28.1 aufgebaut ist. Das Messgerät 10 umfasst zudem ein viertes Kraftmesselement 28.4, das spiegelsymmetrisch bezüglich der Längssymme-trieebene S_{L} zum zweiten Kraftmesselement 28.2 aufgebaut ist.

Das zweite Kraftmesselement 28.2 weist die gleichen Elemente auf wie das erste Kraftmesselement 28.1, wobei die entsprechenden Komponenten jeweils das Zählsuffix ".2" tragen. Beispielsweise umfasst das zweite Kraftmesselement 28.2 die Feder 16.2. Die gleiche Nomenklatur gilt für das dritte Kraftmesselement 28.3 und das vierte Kraftmesselement 28.4.

Zwischen der Kondensatorplatte 22.1 und dem Endabschnitt 20.1 existiert ein Abstand d1. Entsprechend existiert ein Abstand d2 zwischen der zweiten Kondensatorplatte 22.2 und dem zweiten Endabschnitt 20.2.

Figur 1b zeigt den Zustand, in dem eine Kraft F auf den Schaft 14 wirkt. Dadurch verschiebt sich der Schaft 14 relativ zum Substrat und die Abstände d1 und d3 verkleinern sich, wohingegen sich die Abstände d2 und d4 vergrößern. Die jeweils gemessenen Veränderungen der Abstände di werden über nicht eingezeichnete elektrische Leitungen von den Kontaktierungen 26.i (i=1,2,3,4) abgegriffen und an eine nicht eingezeichnete Auswerteeinheit weitergeleitet. Dort wird die tatsächliche Verlagerung ermittelt und daraus anhand einer Federkonstante k die Kraft F berechnet.

Um Messfehler zu vermeiden, ist der Schaft 14 berührungsfrei im Substrat 12 gelagert, das heißt ausschließlich über die Federn 16. Bei dem Substrat 12 handelt es sich um ein Silizium-Einkristall, aus dem die Federn 16 und der Schaft 14, beispielsweise durch trockenes reaktives Ionenätzen (deep reactive Ion etching, DRIE) herausgeformt wurden. Die Federkonstante k liegt beispielsweise bei 0,25 Newton pro Meter. Im Folgenden bezeichnen Bezugszeichen ohne Zählsuffix das Objekt jeweils als solches.

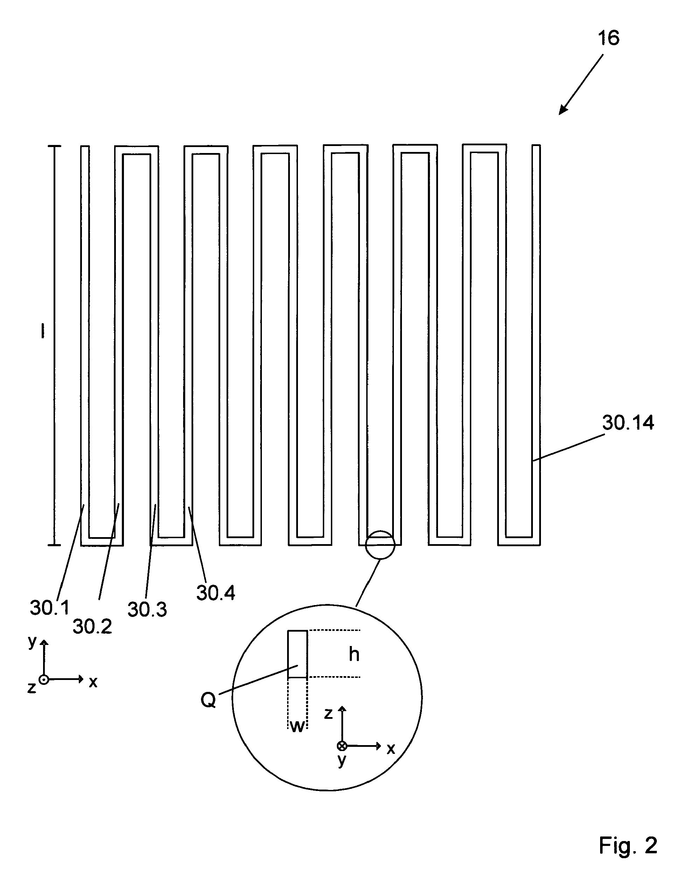

Figur 2 zeigt, dass die Feder 16 eine Vielzahl von im Wesentlichen geradlinig verlaufenden Abschnitten 30.1, 30.2, ..., 30.14 aufweist, die im in Figur 2 gezeigten kraftfreien Zustand alle parallel zueinander angeordnet sind. Die Abschnitte 30 haben alle den gleichen Querschnitt Q, der schematisch in dem Teilbild gezeigt ist. Eine Höhe h des Querschnitts Q ist mehr als fünfmal so groß wie eine Breite b, so dass das Aspektverhältnis größer als 5 ist. Hieraus folgt, dass eine Federkonstante k=kₓ für eine Verformung in x-Richtung klein ist gegenüber einer Federkonstante k_{z}, die sich auf eine Bewegung in z-Richtung bezieht. Beispielsweise kann die Höhe h 50 µm betragen, die Breite w 3 µm und eine Balkenlänge I 500 µm. In Figur 2 sind 14 Mäanderbögen dargestellt, so dass sich insgesamt eine kleine Gesamt-Federkonstante k in Messrichtung, nämlich in x-Richtung, ergibt.

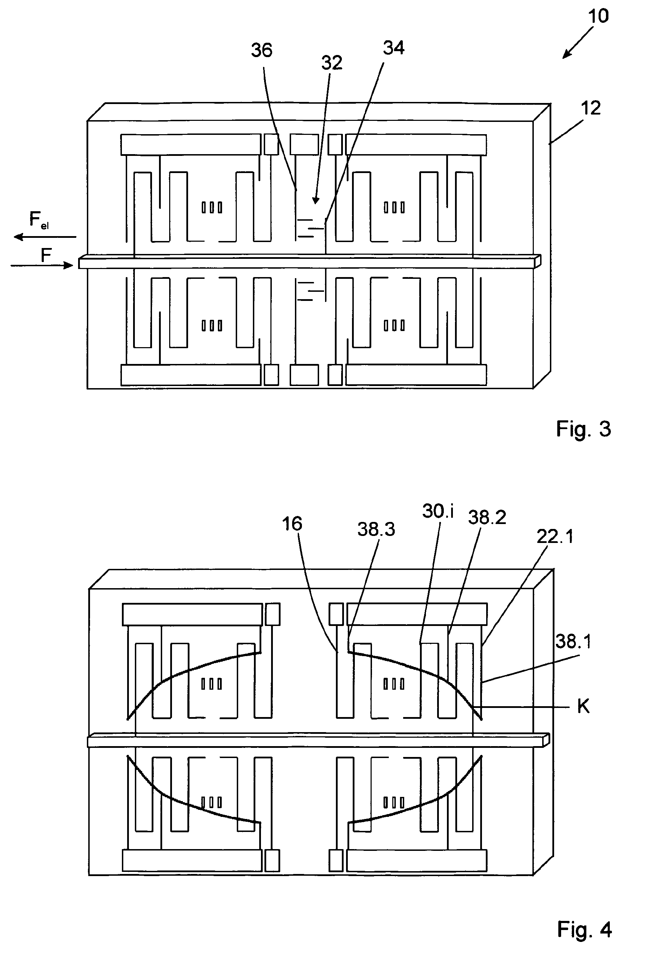

Figur 3 zeigt eine bevorzugte Ausführungsform, bei der das Messgerät 10 einen elektrostatischen Kammantrieb 32 aufweist. Dieser besitzt eine erste Antriebsplatte 34, die mit dem Schaft 14 verbunden ist und eine zweite Antriebsplatte 36, die mit dem Substrat 12 verbunden ist. Durch Anlegen einer Spannung zwischen den beiden Antriebsplatten 34, 36 kann eine elektrostatische Kraft Fₑₗ auf den Schaft ausgeübt werden. Die nicht eingezeichnete Steuerung ist ausgebildet, um eine solche elektrische Spannung zwischen die Antriebplatten 34, 36 anzulegen, dass eine anliegende Kraft F gerade kompensiert wird. Aus der anzulegenden Spannung kann dann die Kraft F ermittelt werden.

Figur 4 zeigt eine bevorzugte Ausführungsform für das Messgerät 10, bei der die Kondensatorplatte 22.1 aus mehreren Teil-Platten besteht, nämlich den Teilplatten 38.1, 38.2 und 38.3. Mittels dieser Platten, die entlang einer Kurve K angeordnet sind, können die Verschiebungen von mehreren Abschnitten 30 der Feder 16.1 gemessen werden, so dass die Messgenauigkeit steigt.

Das Messgerät gemäß den obigen Figuren wird hergestellt durch tiefes Ionenätzen (DRIE, deep reactive ion etching, tiefes Ionenätzen) aus einem Silizium-Einkristall-Substrat. Die Federkonstante k liegt bei 0,25 Newton pro Meter. Eine Open-Loop-Auflösung ist kleiner als 5 Pikonewton, eine gemäßigte Closed-Loop-Auflösung liegt bei 25 Pikonewton.

Das in den Figuren gezeigte Messgerät ist beispielsweise Teil eines nicht eingezeichneten Rastersondenmikroskops, beispielsweise eines Rasterkaftmikroskops. Die auf einem Kantilever des Rasterkraftmikroskops anliegenden Kräfte können mit dem angegebenen Messgerät besonders genau gemessen werden.

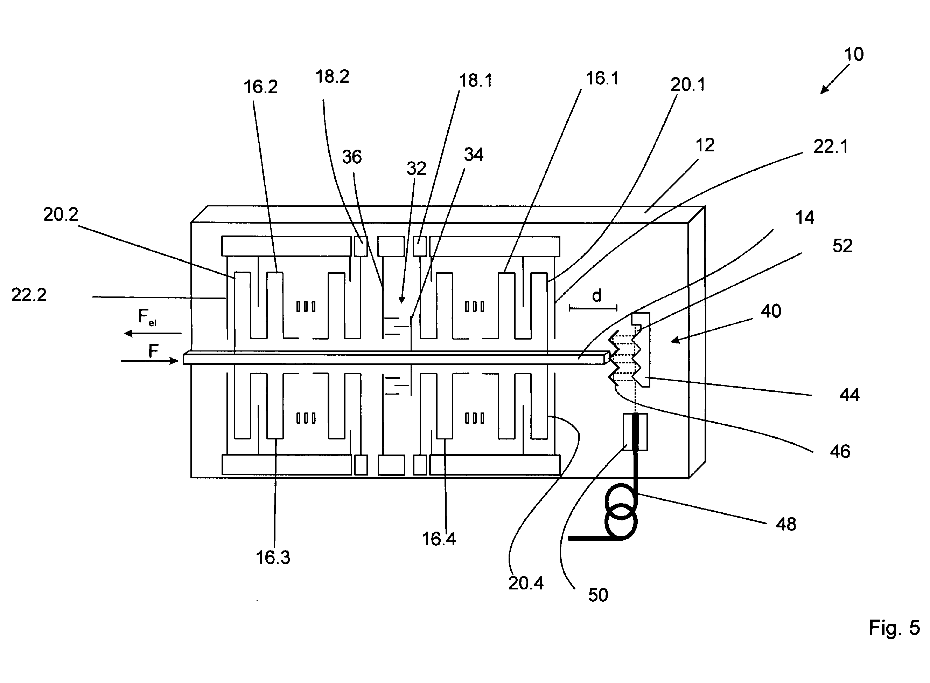

Figur 5 zeigt eine dritte alternative Ausführungsform eines erfindungsgemäßen Kraftmessgeräts 10, das eine Wegmessvorrichtung 40 aufweist. Die Wegmessvorrichtung 40 umfasst ein Mehrfachreflexionsinterferometer 42, das einen ersten Reflektor 44 und einen zweiten Reflektor 46 aufweist. Der erste Reflektor 44 ist relativ zum Substrat 12 bewegbar am Substrat 12 gelagert. Der zweite Reflektor 46 ist mit dem Schaft 14 starr verbunden.

Die Wegmessvorrichtung 40 umfasst zudem eine Lichtleitfaser 48, die mittels eines Halters 50 am Substrat 12 befestigt ist. Ein Laserlichtstrahl 52 tritt aus der Lichtleitfaser 48, wird mehrfach zwischen erstem Reflektor 44 und dem zweiten Reflektor 46 hin- und herreflektiert, danach an einem Ende des ersten Reflektors 44 in den Lichtpfad zurückreflektiert und gelangt so in die Lichtleitfaser 48 zurück. Über einen nicht eingezeichneten Strahlteiler werden der einlaufende Lichtstrahl und der zurückreflektierte Lichtstrahl überlagert und die entstehende Interferenz mit einem ebenfalls nicht dargestellten Fotodetektor erfasst. Aus dem Interferenz-Signal wird dann in einer ebenfalls nicht eingezeichneten elektrischen Steuerung ein Abstand d zwischen dem ersten Reflektor 44 und dem zweiten Reflektor 46 bzw. eine Änderung Δd dieses Abstands erfasst.

Soll an einem Objekt die Federkonstante bestimmt werden, so wird über die elektrische Steuerung an den elektrischen Kammantrieb 32 eine Spannung angelegt, die zu einer Bewegung des Schafts 14 relativ zum Substrat 12 führt. Diese Bewegung des Schafts 14 führt zu einer Deformation des zu untersuchenden Objekts und zu einer Rückstellkraft, die das Objekt auf den Schaft 14 ausübt. Aus dem Abstand d, der ohne das Messobjekt zu erwarten wäre, dem tatsächlich gemessenen Abstand d und der elektrostatischen Kraft wird dann die Federkonstante berechnet.

### Bezugszeichenliste

- 10: Messgerät
- 12: Substrat
- 14: Schaft
- 16: Feder
- 18: Substrat-Befestigungsstelle

- 20: Endabschnitt
- 21: Schaft-Befestigungsstelle
- 22: Kondensatorplatte
- 24: Sensor
- 26: Kontaktierung
- 28: Kraftelement

- 30: Abschnitt
- 32: Kammantrieb
- 34: Antriebsplatte
- 36: Antriebsplatte
- 38: Teil-Platte

- 40: Wegmessvorrichtung
- 42: Mehrfachreflexionsinterferometer
- 44: erster Reflektor
- 46: zweiter Reflektor
- 48: Lichtleitfaser

- 50: Halter
- 52: Lichtstrahl

- d: Abstand
- F: Kraft
- d: Abstand
- S_{L}: Längs-Symmetrieebene
- S_{Q}: Quer-Symmetrieebene
- L: Schaft-Längsache
- k: Federkonstante
- h: Höhe
- w: Breite
- I: Balkenlänge
- Fₑₗ: elektrische Kraft
- Q: Querschnitt

## Patentansprüche

1. Kraftmessgerät, das ausgebildet ist für zu messende Kräfte unterhalb von 1 Mikronewton, mit
(a) einem Substrat (12),
(b) einem Schaft (14) zum Aufnehmen der zu messenden Kraft (F),
(c) einer mäandrierend geformten Feder (16), die
- in einer Substrat-Befestigungsstelle (18) an dem Substrat (12) befestigt ist und
- einen ersten Abschnitt und zumindest einen zweiten Abschnitt in Form eines Endabschnitts (20), der in einer Schaft-Befestigungsstelle (21) am Schaft (14) befestigt ist, aufweist, und
(d) einem kapazitiven Sensor (24), der angeordnet ist zum Erfassen einer Position zumindest eines Abschnitts (20) relativ zum Substrat (12).

2. Kraftmessgerät nach Anspruch 1, **dadurch gekennzeichnet, dass** der kapazitive Sensor (24) angeordnet ist zum Erfassen einer Position des Endabschnitts (20) relativ zum Substrat (12).

3. Kraftmessgerät nach Anspruch 1 oder 2, **gekennzeichnet durch**
(e) eine zweite mäandrierend geformten Feder (16.2), die
- in einer Substrat-Befestigungsstelle (18.2) an dem Substrat (12) befestigt ist,
- einen ersten Abschnitt und zumindest einen zweiten Abschnitt in Form eines zweiten Endabschnitts (20.2), der in einer zweiten Schaft-Befestigungsstelle (21.2) an dem Schaft (14) befestigt ist, aufweist und
- bezüglich einer zu einer Schaft-Längsachse (L) des Schafts (14) senkrecht stehenden Quer-Symmetrieebene (S_{Q}) symmetrisch zur ersten Feder (16.1) ausgebildet ist, und
(f) einen zweiten kapazitiven Sensor (24.2) zum Erfassen einer Position zumindest eines Abschnitts, insbesondere des zweiten Endabschnitts (20.2), der zweiten Feder (16.2) relativ zum Substrat (12).

4. Kraftmessgerät nach Anspruch 3, **dadurch gekennzeichnet, dass** der zweite kapazitive Sensor (24.2) angeordnet ist zum Erfassen einer Position des zweiten Endabschnitts (20.2) relativ zum Substrat (12).

5. Kraftmessgerät nach einem der vorstehenden Ansprüche, **gekennzeichnet durch**
(g) eine dritte mäandrierend geformte Feder (16.3), die
- in einer dritten Substrat-Befestigungsstelle (18.3) an dem Substrat (12) befestigt ist,
- einen ersten Abschnitt und zumindest einen zweiten Abschnitt in Form eines dritten Endabschnitts (20.3), der in einer dritten Schaft-Befestigungsstelle (21.3) an dem Schaft (14) befestigt ist und
- bezüglich einer parallel zur Schaft-Längsachse (L) verlaufenden Längs-Symmetrieebene (SL) symmetrisch zur ersten Feder (16.2) ausgebildet ist, aufweist,
(h) einen dritten kapazitiven Sensor zum Erfassen einer Position zumindest eines Abschnitts, insbesondere des dritten Endabschnitts (20.3), der dritten Feder relativ zum Substrat (12),
(i) eine vierte mäandrierend geformten Feder (16.4), die
- in einer vierten Substrat-Befestigungsstelle (18.4) an dem Substrat (12) befestigt ist,
- einen ersten Abschnitt und zumindest einen zweiten Abschnitt in Form eines vierten Endabschnitts, der in einer Schaft-Befestigungsstelle an dem Schaft (14) befestigt ist, aufweist und
- bezüglich einer parallel zur Schaft-Längsachse (L) verlaufenden Längs-Symmetrieebene (SL) symmetrisch zur zweiten Feder (16.2) ausgebildet ist, und
(j) einen vierten kapazitiven Sensor (24.4) zum Erfassen einer Position zumindest eines Abschnitts, insbesondere des vierten Endabschnitts, der vierten Feder (16.4) relativ zum Substrat (12).

6. Kraftmessgerät nach einem der vorstehenden Ansprüche, **dadurch gekennzeichnet, dass** alle Endabschnitte (20) im Wesentlichen geradlinig verlaufen.

7. Kraftmessgerät nach einem der vorstehenden Ansprüche, **dadurch gekennzeichnet, dass** die mäandrierend geformten Federn (16) eine Vielzahl von im Wesentlichen geradlinig verlaufenden Abschnitten (30) umfassen, die im kraftfreien Zustand alle parallel zueinander angeordnet sind.

8. Kraftmessgerät nach einem der vorstehenden Ansprüche, **dadurch gekennzeichnet, dass** die Abschnitte einen gleichen Querschnitt (Q) aufweisen, der ein Aspektverhältnis von mehr als 5 aufweist.

9. Kraftmessgerät nach einem der vorstehenden Ansprüche, **dadurch gekennzeichnet, dass** die Zahl der Abschnitte der ersten Feder (16) in Form von Faltungen der Feder minimal 6 beträgt.

10. Kraftmessgerät nach einem der vorstehenden Ansprüche, **gekennzeichnet durch** einen elektrostatischen Kammantrieb (32), der angeordnet ist zum Aufbringen einer Kraft auf den Schaft (14), insbesondere zum Kompensieren der am Schaft (14) anliegenden zu messenden Kraft (F).

11. Kraftmessgerät nach einem der vorstehenden Ansprüche, **dadurch gekennzeichnet, dass** die mindestens eine Feder (16) und der mindestens eine kapazitive Sensor (24) lithographisch aus dem Substrat (12) hergestellt sind.

12. Kraftmessgerät nach einem der vorstehenden Ansprüche, **dadurch gekennzeichnet, dass** zumindest einer der Sensoren (24) eingerichtet ist, um die Position von zumindest zwei Abschnitten der jeweiligen Feder relativ zum Substrat (12) zu erfassen.

13. Kraftmessgerät nach einem der vorstehenden Ansprüche, **gekennzeichnet durch** eine Wegmessvorrichtung, die ausgebildet ist zum Messen einer Änderung einer Position des Schafts (14) relativ zum Substrat (14).

14. Kraftmessgerät nach Anspruch 13, **dadurch gekennzeichnet, dass** die Wegmessvorrichtung ein Interferometer umfasst.

15. Kraftmessgerät nach Anspruch 14, **dadurch gekennzeichnet, dass** das Interferometer einen Interferogrammzähler in Form eines kapazitiven Sensors umfasst.
